# EUROPEAN PATENT APPLICATION

(11) **EP 3 886 375 A1**
(43) Date of publication of application: **29.09.2021**
(21) Application number: 19903566.8
(22) Date of filing: 24.12.2019
(51) Int. Cl.: H04L 12/70

(54) **MESSAGE PROCESSING METHOD, MESSAGE FORWARDING METHOD, APPARATUS AND DEVICE**

(30) Priority: 28.12.2018 CN 201811623644
(71) Applicant: Huawei Technologies Co., Ltd., Longgang District Shenzhen, Guangdong 518129 (CN)
(72) Inventor: XIA, Yinben, Shenzhen, Guangdong 518129 (CN); LIU, Shixing, Shenzhen, Guangdong 518129 (CN)
(74) Representative: Gill Jennings & Every LLP
(86) International application number: PCT/CN2019/127893
(87) International publication number: WO 2020/135416

(57) **Abstract**

Embodiments of this application disclose a packet processing method, apparatus, and device, and a packet forwarding method, apparatus, and device, to improve packet forwarding efficiency, save storage space of a network device, and expand a network scale. The packet processing method in the embodiments of this application includes: obtaining a packet including a destination address; obtaining outbound interface information of a network device on a forwarding path based on the destination address of the packet, where the forwarding path is a path for forwarding the packet from a source device to a destination device corresponding to the destination address; and encapsulating a packet header for the packet, where the packet header includes the outbound interface information of the network device that forwards the packet on the forwarding path.

## Description

This application claims priority to Chinese Patent Application No. 201811623644.0, filed with the China National Intellectual Property Administration on December 28, 2018 and entitled "PACKET PROCESSING METHOD, APPARATUS, AND DEVICE, AND PACKET FORWARDING METHOD, APPARATUS, AND DEVICE", which is incorporated herein by reference in its entirety.

### TECHNICAL FIELD

This application relates to the network communications field, and in particular, to a packet processing method, apparatus, and device, and a packet forwarding method, apparatus, and device.

### BACKGROUND

With rapid growth of emerging services such as artificial intelligence and big data, a demand for a network device to provide a low-latency packet forwarding capability is increasing. Currently, when forwarding a packet, the network device usually needs to query entries such as a forwarding information table (forwarding info base, FIB) and a media access control (media access control, MAC) table to obtain outbound interface information. However, it takes time to obtain the outbound interface information for packet forwarding by searching the entries. Therefore, packet forwarding efficiency of the network device is relatively low, and it is difficult to meet a currently increasing demand for a packet forwarding speed. In addition, because the network device needs to store these entries, storage space of the network device is also occupied. However, the storage space of the network device is limited. Therefore, a size of the forwarding information table or the MAC table that can be stored is limited, and consequently a network dimension is limited.

### SUMMARY

Embodiments of this application provide a packet processing method, apparatus, and device, and a packet forwarding method, apparatus, and device, to improve packet forwarding efficiency and save storage space of a network device.

According to a first aspect, an embodiment of this application provides a packet processing method. The method is applied to a source device, and the source device may be user equipment (user equipment, UE), a server, a router, a switch, a software-defined networking (software defined network, SDN) controller, or the like. The user equipment may include a personal computer (personal computer, PC), a mobile phone, a tablet computer, and the like. The packet processing method includes the following steps. First, the source device obtains topology information of all network devices, for example, device identifiers, port numbers, and IP addresses of all the network devices. Then, the source device obtains a packet including a destination address. The destination address of the packet may be an internet protocol (Internet Protocol, IP) address, and may be specifically an internet protocol version 6 (Internet Protocol version 6, IPv6) address, an internet protocol version 4 (Internet Protocol version 4, IPv4) address, or the like. This is not specifically limited in this application. The source device may calculate, based on the destination address of the packet and topology information of an entire network, a forwarding path for forwarding the packet to a destination device corresponding to the destination address. Outbound interface information of a network device on the forwarding path may be determined based on a port number of a port connected between network devices on the forwarding path. The outbound interface information of the network device may be a port number, or may be an outbound interface index. Finally, the source device encapsulates a packet header for the packet, and the packet header includes the outbound interface information of the network device on the forwarding path. The packet header may be, for example, a segment routing header (segment routing header, SRH). In this embodiment of this application, the packet header may include outbound interface information of all network devices on the forwarding path, or may include outbound interface information of some network devices. After obtaining the packet, the network device on the forwarding path may obtain the outbound interface information of the network device from the packet header of the packet, and then forward the packet to a next-hop network device through an interface corresponding to the outbound interface information. In comparison with a conventional technology, the network device on the forwarding path can forward the packet without searching a forwarding information table or a MAC table, thereby improving packet forwarding efficiency. In addition, the network device on the forwarding path does not need to store the forwarding information table or the MAC table. In this way, not only storage space is saved, but also a network scale is no longer limited by the forwarding information table or the MAC table with a limited size, so that the network scale is expanded.

The outbound interface information of the network device on the forwarding path may include outbound interface information of the source device, or may not include the outbound interface information of the source device. If the outbound interface information of the network device on the forwarding path includes the outbound interface information of the source device, the method further includes: forwarding the packet to a next-hop device of the source device through an outbound interface corresponding to the outbound interface information of the source device. In this way, packet forwarding efficiency of the source device is improved and storage space of the source device is saved.

Optionally, the packet header may include a first field, for example, a segment left hop count (left) field. The first field stores location information of the outbound interface information of the source device in the packet header. When the outbound interface information of the source device needs to be obtained from the packet, the outbound interface information of the source device may be obtained based on the location information stored in the first field.

Optionally, the packet header may further include a segment list (segment list). The segment list includes an array, and the array is used to store the outbound interface information of the network device on the forwarding path. Each element in each array stores one piece of outbound interface information. To identify each piece of outbound interface information, each element in each array has an index number of the element. Corresponding outbound interface information may be found by using an index number of an element.

In this case, that the first field stores location information of the outbound interface information of the source device in the packet header includes: the first field stores an index number of an array corresponding to the outbound interface information of the source device. When the outbound interface information of the source device needs to be obtained from the packet, the corresponding outbound interface information of the source device may be obtained based on the index number that is of the array corresponding to the outbound interface information of the source device and that is stored in the first field.

Optionally, elements in the array in the segment list may be arranged in a sequence of forwarding the packet by network devices included in the forwarding path, and the index number of the array indicates the forwarding sequence. For example, the forwarding sequence of the packet may be indicated by index numbers of arrays in descending order.

Optionally, the packet header further includes a second field, and the second field is used to indicate the source device to modify, after the source device obtains the outbound interface information corresponding to the source device, the location information stored in the first field into location information of outbound interface information of the next-hop network device in the packet header in the packet header. In this way, the next-hop network device may obtain the outbound interface information of the next-hop network device based on the location information stored in the first field of the packet. In one possible implementation, the second field may be stored in the segment list. For SRv6, the second field may be a function field in a segment identifier (segment identifier, SID). The function field includes many types of fields. In this embodiment of this application, a field that can implement the foregoing function is an END field belonging to the function field.

Optionally, the method further includes: encapsulating an IPv6 header for the packet, where the IPv6 header includes a destination address field, and the destination address field stores the outbound interface information of the source device, to be the same as the outbound interface information corresponding to the location information stored in the first field. When the location information stored in the first field changes, the outbound interface information stored in the target address field also needs to correspondingly change.

Optionally, the method further includes: encapsulating an Ethernet header for the packet, where the Ethernet header includes a destination MAC address, and the destination MAC address is a specific MAC address and is used to indicate the network device on the forwarding path to obtain, from the SRH or the IPv6 header, the outbound interface information corresponding to the network device. After obtaining the packet, the network device on the forwarding path may determine whether the destination MAC address in the Ethernet header is a specific MAC address, and if yes, extract the corresponding outbound interface information from the packet header of the packet, and forward the packet through the interface corresponding to the outbound interface information; or of no, perform forwarding through table lookup in a conventional manner.

According to a second aspect, an embodiment of this application provides a packet forwarding method. The method is applied to a network device, and the network device is the network device on the forwarding path mentioned above. The network device may be a router, a switch, an SDN controller, or the like. The packet forwarding method includes the following steps. First, the network device receives a packet, where a packet header of the packet includes outbound interface information that is of the network device and that is used to forward the packet. The packet header is, for example, a segment routing header. The outbound interface information is used by the network device to send the packet to a next-hop network device of the network device. Next, the network device determines, based on the outbound interface information, an outbound interface corresponding to the outbound interface information, and sends the packet to the next-hop network device of the network device through the outbound interface. After the network device obtains the outbound interface information of the network device from the packet, the network device may determine the corresponding outbound interface of the network device based on the outbound interface information in the packet, so that the packet can be sent to the next-hop network device through the corresponding outbound interface. In an entire packet forwarding process, the network device does not need to search a forwarding information table or a MAC table, and certainly does not need to store the forwarding information table or the MAC table. Therefore, not only packet forwarding time of the network device is shortened, but also storage space of the network device is saved, so that a network scale is expanded.

Optionally, the packet header may further include a first field, and the first field is, for example, a segment left hop count field. The first field stores location information of the outbound interface information of the network device in the packet. Before the outbound interface corresponding to the outbound interface information is determined based on the outbound interface information, the method further includes: obtaining the outbound interface information of the network device from the packet based on the location information that is of the outbound interface information of the network device in the packet header and that is stored in the first field.

Optionally, the packet header further includes a segment list, the segment list includes an array, an element in the array is used to store the outbound interface information of the network device, and the element in the array has an index number.

That the first field stores location information of the outbound interface information of the network device in the packet includes: the first field stores an index number of an element corresponding to the outbound interface information of the network device. When the outbound interface information of the network device is obtained, the corresponding element is found based on the index number that is of the element and that is stored in the first field, and the outbound interface information of the network device is obtained from the element.

Optionally, the packet header further includes a second field, and the packet header further includes outbound interface information of the next-hop network device. After the network device receives the packet, the method further includes: modifying, according to an indication of the second field, the location information that is of the outbound interface information of the network device in the packet and that is stored in the first field into location information of the outbound interface information of the next-hop network device in the packet. If the second field stores the index number of the element corresponding to the outbound interface information of the network device, the outbound interface information of the next-hop network device is also stored in an element in the array in the packet header, and the index number of the element corresponding to the outbound interface information of the network device is different from an index number of the element corresponding to the outbound interface information of the next-hop network device. In this case, the index number that is of the element corresponding to the outbound interface information of the network device and that is stored in the first field may be modified, according to the indication of the second field, to the index number of the element corresponding to the outbound interface information of the next-hop network device.

Optionally, the packet further includes an IPv6 header, the IPv6 header includes a destination address field, and the destination address field stores the outbound interface information of the network device, to match the location information stored in the first field.

Optionally, after the outbound interface corresponding to the outbound interface information is determined based on the outbound interface information, the method further includes: modifying the outbound interface information of the network device stored in the destination address field to the outbound interface information of the next-hop device.

Optionally, the packet further includes an Ethernet header, the Ethernet header includes a destination media access control MAC address, and the destination MAC address is used to indicate the network device to determine the corresponding outbound interface based on the outbound interface information in the packet header.

According to a third aspect, an embodiment of this application provides a packet processing apparatus. The apparatus is applied to a source device and is configured to perform the method performed by the source device in any one of the first aspect and the possible implementations of the first aspect. Specifically, the source device includes a unit configured to perform the method in any one of the first aspect and the possible implementations of the first aspect.

According to a fourth aspect, an embodiment of this application further provides a packet forwarding apparatus. The apparatus is applied to a network device and is configured to perform the method performed by the network device in any one of the second aspect and the possible implementations of the second aspect. Specifically, the network device includes a unit configured to perform the method in any one of the first aspect and the possible implementations of the first aspect.

According to a fifth aspect, an embodiment of this application provides a packet processing device. The device is a source device, and the source device includes a memory, a processor, and a transceiver. The memory is configured to store an instruction. The processor is configured to execute the instruction in the memory and perform the foregoing packet processing method. The transceiver is configured to communicate with a network device on a forwarding path.

According to a sixth aspect, an embodiment of this application provides a packet forwarding device. The device is a network device, and the network device includes a memory, a processor, and a transceiver. The memory is configured to store an instruction. The processor is configured to execute the instruction in the memory and perform the foregoing packet forwarding method. The transceiver is configured to communicate with a next-hop network device of the network device.

According to a seventh aspect, an embodiment of this application provides a computer readable storage medium including an instruction. When the instruction runs on a computer, the computer is enabled to perform the foregoing packet processing method.

According to an eighth aspect, an embodiment of this application provides a computer readable storage medium including an instruction. When the instruction runs on a computer, the computer is enabled to perform the foregoing packet forwarding method.

According to a ninth aspect, an embodiment of this application provides a packet processing system, and the system includes a source device and a network device. The source device is configured to: obtain a packet including a destination address; obtain outbound interface information of a network device on a forwarding path based on the destination address of the packet, where the forwarding path is a path for forwarding a packet from the source device to a destination device corresponding to the destination address; and encapsulating a packet header for the packet, where the packet header includes the outbound interface information of the network device that forwards the packet on the forwarding path. The network device is configured to: receive the packet; determine, based on the outbound interface information in the packet, an outbound interface corresponding to the outbound interface information; and send the packet to a next-hop network device of the network device through the outbound interface.

### BRIEF DESCRIPTION OF DRAWINGS

FIG. 1 is a structural block diagram of a packet processing system according to an embodiment of this application;
FIG. 2 is a schematic flowchart of a packet processing method according to an embodiment of this application;
FIG. 3 is a schematic format diagram of a TLV field of a packet according to an embodiment of this application;
FIG. 4 is a schematic format diagram of the packet corresponding to the embodiment shown in FIG. 1;
FIG. 5 is a schematic format diagram of a packet sent by a network device 101 to a network device 102 according to an embodiment of this application;
FIG. 6 is a flowchart of a packet forwarding method according to an embodiment of this application;
FIG. 7 is a schematic format diagram of a packet sent by a network device 102 to a network device 103 according to an embodiment of this application;
FIG. 8 is a schematic format diagram of a packet sent by a network device 103 to a network device 104 according to an embodiment of this application;
FIG. 9 is a structural block diagram of a packet processing apparatus according to an embodiment of this application;
FIG. 10 is a structural block diagram of a packet forwarding apparatus according to an embodiment of this application;
FIG. 11 is a structural block diagram of a packet processing device according to an embodiment of this application;
FIG. 12 is a structural block diagram of a packet forwarding device according to an embodiment of this application; and
FIG. 13 is another structural block diagram of a packet processing system according to an embodiment of this application.

### DESCRIPTION OF EMBODIMENTS

In a conventional technology, when forwarding a packet, a network device needs to obtain corresponding outbound interface information through table lookup. For example, if a destination MAC address in the packet is a MAC address of an interface through which the network device receives the packet, the network device needs to search a locally stored forwarding information table based on a destination IP address in the packet, and search the forwarding information table for outbound interface information corresponding to the destination IP address. If the MAC address in the packet is not the MAC address of the interface through which the network device receives the packet, a MAC table needs to be searched based on the destination MAC address in the packet, and the MAC table is searched for outbound interface information corresponding to the MAC address.

However, it takes relatively long time to search an entry such as the forwarding information table or the MAC table, and packet forwarding efficiency is relatively low especially when there are many entries. In addition, because the network device needs to store these tables, a relatively large amount of storage space of the network device needs to be occupied.

To overcome the foregoing technical problems, embodiments of this application provide a packet processing system, method, and apparatus, and a related device, to improve a packet forwarding efficiency of the network device and reduce storage space of the network device.

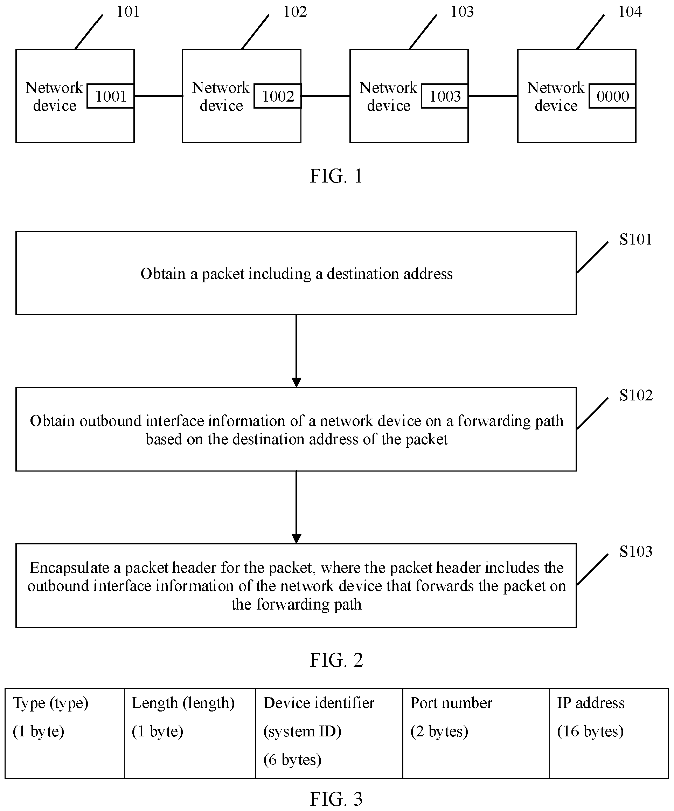

The following uses an application scenario as an example to describe a packet processing system provided in an embodiment of this application. Referring to FIG. 1, the system may be applied to an SRv6 network. The SRv6 network is a network in which segment routing (segment routing, SR) is deployed on an IPv6 data plane.

The packet processing system in this embodiment of this application specifically includes a network device 101, a network device 102, a network device 103, and a network device 104. The network device 101 is connected to the network device 102, the network device 102 is connected to the network device 103, and the network device 103 is connected to the network device 104.

The network device 101 and the network device 104 may be user equipment, a server, a router, a switch, a software-defined networking controller, or the like. The user equipment may include a personal computer, a mobile phone, a tablet computer, and the like.

The network device 102 and the network device 103 may be a router, a switch, an SDN controller, or the like.

In the packet processing system, the network device 101 may obtain topology information of each network device in the SRv6 network, and may calculate a forwarding path of a to-be-sent packet. The to-be-sent packet may be generated by the network device 101, or may be received from another network device.

In this embodiment of this application, the topology information of each network device includes, for example, a device identifier (system ID), a port number, and an IPv6 address of the network device. The device identifier is used to uniquely identify the network device. The network device 101 may calculate the forwarding path of the packet based on an IPv6 address of a port of each network device and a destination address of the packet. The forwarding path is a path for forwarding the packet from a start node of the packet (which is the network device 101 in this embodiment of this application) to a network device (which may be the network device 104 in this embodiment of this application) corresponding to the destination address of the packet. Therefore, in this embodiment of this application, the forwarding path of the packet is the network device 101 -> the network device 102 -> the network device 103 -> the network device 104.

After the forwarding path of the packet is obtained through calculation, the network device 101 may encapsulate a packet header for the packet. The packet header includes outbound interface information of a network device on the forwarding path. The outbound interface information herein is used to identify an outbound interface that is in the network device and that is used to forward the packet. In this embodiment of this application, the outbound interface information may be a port number or an interface index. In this embodiment of this application, the packet header includes outbound interface information of the network device 101, outbound interface information of the network device 102, outbound interface information of the network device 103, and outbound interface information of the network device 104. The outbound interface information of the network device 101 is used by the network device 101 to forward the packet to the network device 102, the outbound interface information of the network device 102 is used by the network device 102 to forward the packet to the network device 103, and the outbound interface information of the network device 103 is used by the network device 103 to forward the packet to the network device 104.

Therefore, a packet forwarding process is as follows: The network device 101 forwards the packet to the network device 102 through a corresponding outbound interface based on the outbound interface information of the network device 101 included in the packet header. After receiving the packet, the network device 102 forwards the packet to the network device 103 through a corresponding outbound interface based on the outbound interface information of the network device 102 included in the packet header. After receiving the packet, the network device 103 forwards the packet to the network device 104 through a corresponding outbound interface based on the outbound interface information of the network device 103 included in the packet header. In this way, the packet arrives at the network device corresponding to the destination address, namely, the network device 104.

It may be learned that, in the packet forwarding process, the network device 101, the network device 102, the network device 103, and the network device 104 do not need to search a forwarding information table or a MAC table to obtain outbound interface information, but may directly learn of the outbound interface information from the packet header of the packet, thereby reducing time required for table lookup and improving packet forwarding efficiency. In addition, the network device 101, the network device 102, the network device 103, and the network device 104 do not need to store the forwarding information table or the MAC table. Therefore, storage space of these network devices is also saved, and a network scale is expanded.

Referring to FIG. 2, an embodiment of this application provides a packet processing method. The method is applied to a source device, and the source device may be the network device 101 in the embodiment shown in FIG. 1.

The packet processing method provided in this embodiment of this application specifically includes the following steps.

S101: Obtain a packet including a destination address.

In this embodiment of this application, the packet may be generated by the source device, or may be a packet received from another network device. The destination address of the packet may be an IP address, and may be specifically an IPv6 address, an IPv4 address, or the like. This is not specifically limited in this application.

In actual application, a user may select some specific packets from packets generated or received by the source device, to perform procedures of S101 to S103. A specific selection rule may be to select, as the packet, a packet with a specific destination MAC address or a specific destination IP address, a packet that does not conform to a routing protocol format, or the like. After the packet is obtained through selection, S101 to S103 are performed to implement efficient packet forwarding and save storage space of a network device.

S102: Obtain outbound interface information of a network device on a forwarding path based on the destination address of the packet.

In this embodiment of this application, before obtaining the packet, the source device may obtain topology information of all network devices, for example, device identifiers, port numbers, and IP addresses of all the network devices. Specifically, all the network devices may send a packet including the topology information to the source device, so that the source device obtains the topology information of all the network devices. The packet including the topology information may be a label switched path (label switching path, LSP) packet based on an intermediate system-to-intermediate system (intermediate system to intermediate system, IS-IS) protocol, a link-state advertisement (link state advertisement, LSA) packet based on open shortest path first (open shortest path first, OSPF), an update message (update message) based on a border gateway protocol (Border Gateway Protocol, BGP), or the like.

The topology information may be carried in a type-length-value (type-length-value, TLV) field of the packet. FIG. 3 is a schematic format diagram of the TLV field of the packet. In the figure, the TLV field may include a type (type) of the TLV field, a length (length) of the TLV field, and a device identifier, a port number, and an IP address of a network device. The type of the TLV field may occupy 1 byte, the length of the TLV field may occupy 1 byte, the device identifier may occupy 6 bytes, the port number may occupy 2 bytes, and the IP address may occupy 16 bytes.

Based on topology information of an entire network, the source device may calculate a path for the packet from the source device to any network device in the entire network. Therefore, after obtaining the packet, the source device may calculate the forwarding path of the packet based on the destination address of the packet and the topology information of the entire network. The forwarding path is a path for forwarding the packet from the source device to a destination device corresponding to the destination address. In specific application, there may be a plurality of paths from the source device to the destination device, and one of the paths may be selected as the forwarding path. There may be many rules for selecting the forwarding path. For example, a shortest path is selected as the forwarding path. The shortest path is a path with minimum link costs (cost).

In this embodiment of this application, network devices on the forwarding path may include or not include the destination device. Taking the embodiment shown in FIG. 1 as an example, the network device 104 is the destination device, and the network devices on the forwarding path include the network device 101, the network device 102, and the network device 103. The outbound interface information of the network device on the forwarding path is used by the network device to forward the packet to a next-hop network device on the forwarding path, and a corresponding outbound interface may be determined based on the outbound interface information. The outbound interface information may be a port number or an interface index in the foregoing topology information of the entire network. Taking the embodiment shown in FIG. 1 as an example, a port number for forwarding the packet by the network device 101 is 0001, a port number for forwarding the packet by the network device 102 is 0002, and a port number for forwarding the packet by the network device 103 is 0003.

Optionally, the network devices on the forwarding path may alternatively include the destination device, and the corresponding outbound interface information of the network device also includes outbound interface information of the destination device. After receiving the packet, the destination device transmits, based on the outbound interface information of the destination device in a packet header, the packet to an application program installed on the destination device. The outbound interface information of the destination device may be a port number of the destination device. For example, outbound interface information of the network device 104 is a port number 0000 or an interface index.

S103: Encapsulate a packet header for the packet, where the packet header includes the outbound interface information of the network device that forwards the packet on the forwarding path.

After obtaining the outbound interface information of the network device on the forwarding path, the source device may encapsulate the outbound interface information of the network device on the forwarding path into the packet header of the packet. In a process of forwarding the packet, the network device on the forwarding path may obtain the corresponding outbound interface information from the packet header of the packet, and then forward the packet through the outbound interface corresponding to the outbound interface information. In comparison with a conventional technology, the network device on the forwarding path can forward the packet without searching a forwarding information table or a MAC table, thereby improving packet forwarding efficiency. In addition, the network device on the forwarding path does not need to store the forwarding information table or the MAC table. In this way, not only storage space is saved, but also a network scale is no longer limited by a limited quantity of entries, so that the network scale is expanded.

It should be noted that the outbound interface information of the network device encapsulated in the packet header may include outbound interface information of all network devices on the forwarding path, or may include outbound interface information of some network devices. For example, in the embodiment shown in FIG. 1, the outbound interface information of the forwarding network device encapsulated in the packet header may be outbound interface information of one or more of the network device 101, the network device 102, and the network device 103.

The outbound interface information of the network device encapsulated in the packet header may include or may not include outbound interface information of the source device. If the outbound interface information of the network device encapsulated in the packet header includes the outbound interface information of the source device, the source device may obtain the outbound interface information of the source device from the packet header, to forward the packet to a next-hop device of the source device through an outbound interface corresponding to the outbound interface information of the source device, thereby improving packet forwarding efficiency of the source device and saving storage space of the source device.

In actual application, the packet header of the packet may be a segment routing header in an SR technology or another type of packet header. This is not specifically limited in this embodiment of this application. The packet header may include a first field, and the first field may be, for example, a segment left hop count (left) field or another type of field. This is not specifically limited in this embodiment of this application. If the network devices on the forwarding path include the source device, the first field may store location information of the outbound interface information of the source device in the packet header. When the outbound interface information of the source device needs to be obtained from the packet, the outbound interface information of the source device may be obtained based on the location information stored in the first field.

Optionally, the packet header may further include a segment list used to store the outbound interface information of the network device. Specifically, the segment list includes an array, and each element in the array stores one piece of outbound interface information. To identify each piece of outbound interface information, each element may have an index number of the element. Corresponding outbound interface information may be found by using an index number of an element. Elements in the array in the segment list may be arranged in a sequence of forwarding the packet by network devices on the forwarding path, and index numbers of the elements may be used to indicate the forwarding sequence. Correspondingly, the location information that is of the outbound interface information of the source device in the packet header and that is stored in the first field may be an index number of an element corresponding to the outbound interface information of the source device.

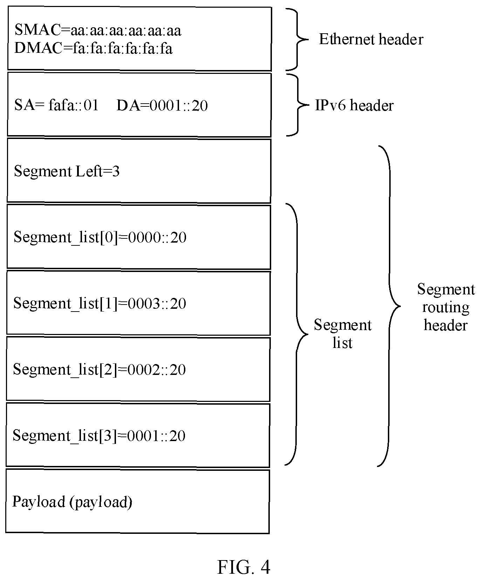

FIG. 4 is a schematic format diagram of the packet corresponding to the embodiment shown in FIG. 1. In addition to a payload of the packet, the packet further includes a packet header, the packet header is a segment routing header, and the segment routing header includes a segment list and a segment left field. The segment list includes an array, and the array includes four elements. Index numbers of the four elements are 0, 1, 2, and 3. As shown in FIG. 4, the four elements are Segment list[3], Segment list[2], Segment_list[1], and Segment_list[0]. Content stored in the four elements may also become SIDs. An element whose index number is 3 stores a port number 0001 of the network device 101, an element whose index number is 2 stores a port number 0002 of the network device 102, an element whose index number is 1 stores a port number 0003 of the network device 103, and an element whose index number is 0 stores a port number 0000 of the network device 104. It should be noted that in the embodiment shown in FIG. 1, the segment list includes the port number of the destination device, namely, the network device 104. In actual application, the port number of the network device 104 may not be included.

The forwarding sequence of the packet may be indicated by using the index numbers of the elements in descending order. Therefore, it may be learned, based on the index numbers of the elements in FIG. 4, that the packet may be sequentially forwarded through ports corresponding to the port numbers 0001, 0002, and 0003. Certainly, in actual application, the forwarding sequence may be alternatively indicated by using the index numbers of the elements in ascending order. The segment left field in the packet header may store the index number 3 of the element corresponding to the port number 0001 of the network device 101. When the port number of the network device 101 needs to be obtained, the element whose index number is 3 may be searched for based on the index number that is of the element and that is stored in the segment left field, and the port number 0001 of the network device 101 is obtained from the element whose index number is 3.

In this embodiment of this application, the packet may further include a second field, and the second field is used to indicate the source device to modify, after the source device obtains the outbound interface information corresponding to the source device, the location information that is of the outbound interface information of the source device in the packet header and that is stored in the first field into location information of outbound interface information of the next-hop network device of the source device in the packet header in the packet header, so that the next-hop network device can obtain the outbound interface information of the next-hop network device based on the location information that is the outbound interface information of the next-hop network device in the packet header and that is stored in the first field.

When the first field stores the index number of the element corresponding to the outbound interface information of the source device, after obtaining, from the first field, the index number of the element corresponding to the outbound interface information of the source device, the source device may modify the index number that is of the element corresponding to the outbound interface information of the source device and that is stored in the first field into an outbound interface of an element corresponding to the outbound interface information of the next-hop network device of the source device.

In one possible implementation, the second field may be stored in the segment list. For SRv6, the second field may be a function field in an SID. The function field includes many types of fields. In this embodiment of this application, a field that can implement the foregoing function is an END field belonging to the function field. The END field may indicate the network device to determine whether the index number of the outbound interface information corresponding to the network device minus 1 is greater than 0. If yes, the index number stored in the segment left field may be modified into the index number corresponding to the outbound interface information of the next-hop network device.

For example, after obtaining the port number 0001 of the network device 101, the network device 101 determines that the index number 3 corresponding to the port number 0001 minus 1 is greater than 0. Therefore, the network device 101 may modify the index number 3 stored in the segment left field into the index number 2 corresponding to the port number 0002 of the network device 102.

In actual application, the END field may be stored in the segment list. For example, 128 bits may be allocated to each element in the array in the segment list, and data stored in the element may include three parts. One part is a port number that occupies 16 bits. One part is the END field, a default value of the END field is 0x20, and the END field occupies 8 bits. A remaining part is reserved bits, and the reserved bits may be all Os and occupy 104 bits. The three parts may be collectively referred to as a segment identifier (segment identification, SID).

Taking segment list[3]=0001::20 as an example for description, "::" represents consecutive 0s, the first 4 digits 0001 represent the port number, the last 4 digits 0x20 represent the END field, and the middle 0s represent the reserved bits. After obtaining 0001::20 from the element whose index number is 3 based on the index number 3 stored in the segment left field, the network device 101 may modify the index number 3 stored in the segment left field into the index number 2 based on the END field 0x20.

In actual application, after encapsulating the packet header for the packet, the source device may further encapsulate an IPv6 header in addition to the packet header. The IPv6 header may include a source address (source address, SA) field and a destination address (destination address, DA) field. The source address field may store an address of a network device that generates the packet. In some embodiments of this application, the destination address field may store the outbound interface information of the source device. In the embodiment shown in FIG. 1, the source address field may store an IPv6 address of the network device 101, namely, fafa::01. The destination address field may store the port number 0001 of the network device 101.

Optionally, if the segment list includes the END field, the destination address may further include the END field. That is, information in the destination address may be the same as information corresponding to an index number that is of an element and that is stored in the segment left field in the segment list. After obtaining information corresponding to an index number that is of an array and that is stored in the second field, the network device may modify the information stored in the destination address into information about the next-hop network device stored in the segment list.

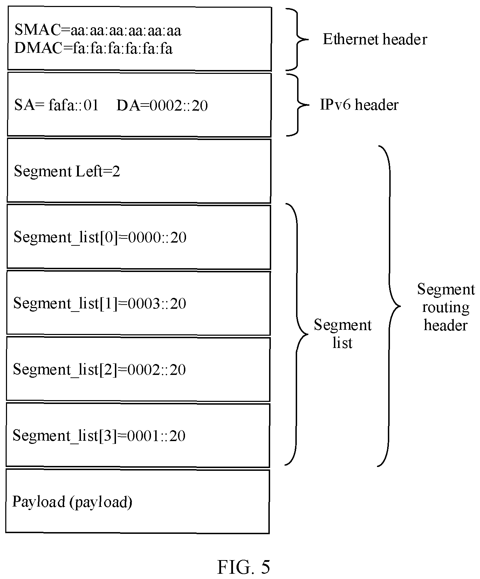

For example, after obtaining the packet in the format shown in FIG. 4, the network device 101 finds, from the segment list based on the index number 3 stored in the segment left field in the packet, information stored in the element whose index number is 3, namely, 0001::20.0001 is a port number of an outbound interface through which the network device 101 sends the packet, and 0x20 is an END instruction. Then, the network device 101 determines, according to the END instruction, whether the index number in the segment left field minus 1 is greater than 0. Because the index number in the segment left field in this case is the index number 3, a result of the determining is being greater than 0. Based on the result of the determining, the network device 101 modifies the index number in the segment left field into the index number 2, and modifies the destination address in the IPv6 header from 0001: :20 into information in an array corresponding to the index number 2, namely, 0002::20, to form a packet format shown in FIG. 5. Finally, the network device 101 sends the packet in the format shown in FIG. 5 to the network device 102 through an outbound interface corresponding to the port number 0001.

In actual application, in addition to encapsulating the IPv6 header in addition to the packet header of the packet, an Ethernet header may be encapsulated in addition to the IPv6 header. The Ethernet header may include a destination MAC (destination MAC, DMAC) address. The destination MAC address may be a specific MAC address, and is used to indicate the network device on the forwarding path to obtain, from the packet header, the outbound interface information corresponding to the network device. That is, after obtaining the packet, the network device determines whether the destination MAC address in the Ethernet header is a specific MAC address, and if yes, extracts the corresponding outbound interface information from the packet header of the packet, and forwards the packet through the interface corresponding to the outbound interface information; or of no, may perform forwarding through table lookup in a conventional manner. In the embodiment shown in FIG. 1, the specific MAC address may be fa:fa:fa:fa:fa:fa.

In addition to the destination MAC address, the Ethernet header of the packet may further include a source MAC (source MAC, SMAC) address. The SMAC address is a MAC address of the network device that generates the packet. Taking the embodiment shown in FIG. 1 as an example, the MAC address of the network device that generates the packet is aa:aa:aa:aa:aa:aa.

The foregoing emphatically describes the packet processing method. The following describes a method for forwarding a packet by a network device on a forwarding path after the network device obtains the packet.

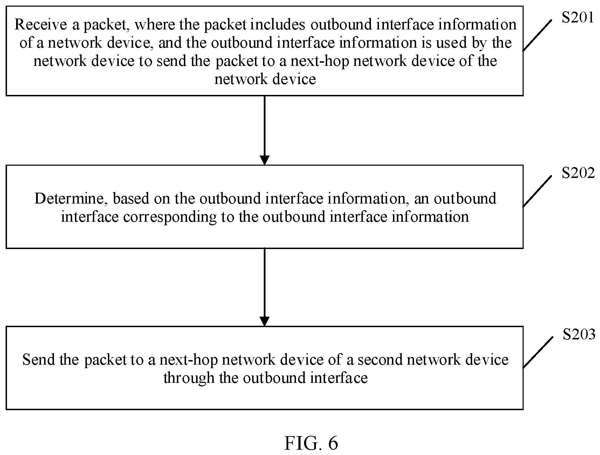

FIG. 6 is a flowchart of a packet forwarding method according to an embodiment of this application.

The packet forwarding method provided in this embodiment of this application may be applied to a network device. The network device and a source device are different network devices. For example, the network device may be the network device 102 or the network device 103 in the embodiment shown in FIG. 1.

The packet forwarding method may include the following steps.

S201: Receive a packet, where a packet header of the packet includes outbound interface information that is of the network device and that is used to forward the packet.

S202: Determine, based on the outbound interface information, an outbound interface corresponding to the outbound interface information.

S203: Send the packet to a next-hop network device of the network device through the outbound interface.

In this embodiment of this application, the packet header of the packet received by the network device includes the outbound interface information of the network device. The outbound interface information corresponds to the outbound interface. The outbound interface information may be, for example, a port number of the outbound interface for sending the packet. The network device may send the obtained packet through the outbound interface corresponding to the outbound interface information.

Taking the embodiment shown in FIG. 1 as an example, if the network device is the network device 101, a port number of the network device may be 0001; if the network device is the network device 102, a port number of the network device may be 0002; or if the network device is the network device 103, a port number of the network device may be 0003.

The outbound interface information of the network device may be stored in the packet header of the packet. The packet header is, for example, a segment routing header, and the segment routing header includes the outbound interface information of the network device.

The packet header may include a first field, for example, a segment left field. The first field may store location information of the outbound interface information of the network device in the packet header. The network device may find the outbound interface information of the network device from the packet header based on the location information stored in the first field.

Optionally, the packet header may further include a second field. After finding the outbound interface information of the network device, the network device may modify, based on the second field, the location information that is of the outbound interface information of the network device in the packet header and that is stored in the first field into location information of outbound interface information of the next-hop network device in the packet header, so that the next-hop network device can find the outbound interface information of the next-hop network device based on the location information stored in the first field, and so on. The second field may be the function field mentioned above. For related content, refer to the foregoing descriptions. Details are not described herein again.

In one possible implementation, the packet header may include a segment list. The segment list includes an array, and the array includes at least one element. An element in the array is used to store the outbound interface information of the network device on the forwarding path. Each element stores one piece of outbound interface information. Each element has an index number of the element. Elements in the segment list may be arranged in a sequence of forwarding the packet by network devices on the forwarding path, and index numbers of the elements may indicate the forwarding sequence. In addition to the outbound interface information, each element in the segment list may store the above END field.

Correspondingly, the first field may store an index number of an element corresponding to the outbound interface information of the network device, and the index number is the location information of the outbound interface information of the network device in the packet header.

After the network device obtains the outbound interface information of the network device from the packet header, the network device may determine the corresponding outbound interface of the network device based on the outbound interface information in the packet, so that the packet can be sent to the next-hop network device through the corresponding outbound interface. In an entire packet forwarding process, the network device does not need to search a forwarding information table or a MAC table, and certainly does not need to store the forwarding information table or the MAC table. Therefore, not only packet forwarding time of the network device is shortened, but also storage space of the network device is saved.

In addition, in actual application, in addition to the packet header, the packet received by the network device may include an IPv6 header and an Ethernet header that are encapsulated in addition to the packet header. For specific descriptions, refer to the foregoing descriptions. Details are not described herein again.

The following uses the network device 102 and the network device 103 in the embodiment shown in FIG. 1 as an example to describe the packet forwarding method provided in this embodiment of this application.

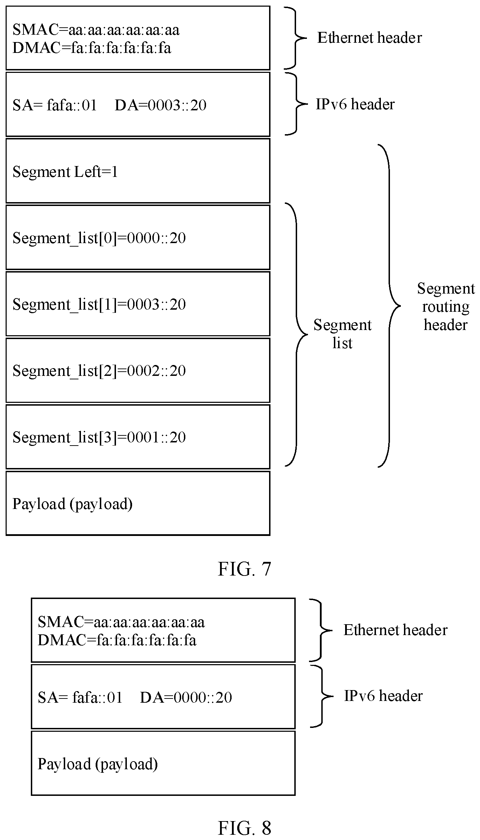

After receiving the packet in the format shown in FIG. 5, the network device 102 finds, from the segment list based on an index number 2 stored in the segment left field in the packet, information corresponding to the index number 2, namely, 0002: :20. 0002 is a port number of an outbound interface through which the network device 102 sends the packet, and 0x20 is an END instruction. Then, the network device 102 determines, according to the END instruction, whether the index number in the segment left field minus 1 is greater than 0. Because the index number in the segment left field in this case is the index number 2, a result of the determining is yes. Based on the result of the determining, the network device 102 modifies the index number in the segment left field into an index number 1, and modifies a destination address in the IPv6 header from 0002: :20 into information in an array corresponding to the index number 1, namely, 0003: :20, to form a packet format shown in FIG. 7. Finally, the network device 102 sends the packet in the format shown in FIG. 7 to the network device 103 through an outbound interface corresponding to the port number 0002.

After receiving the packet in the format shown in FIG. 7, the network device 103 finds, from the segment list based on the index number 1 stored in the segment left field in the packet, the information corresponding to the index number 1, namely, 0003: :20. 0003 is a port number of an outbound interface through which the network device 103 sends the packet, and 0x20 is an END instruction. Then, the network device 103 determines, according to the END instruction, whether the index number in the segment left field minus 1 is greater than 0. Because the index number in the segment left field in this case is the index number 1, a result of the determining is no, indicating that the network device 103 is a last-hop device. Then, the network device 103 removes the packet header from the packet based on the result of the determining, reserves only the IPv6 header, the Ethernet header, and a payload, and modifies the destination address in the IPv6 header from 0003::20 into information in an array corresponding to the index number 0. An element whose index number is 0 stores an SID of the network device 104, namely, 0000: :20, to form a packet format shown in FIG. 8. The SID includes a port number 0000 of the network device 104. Finally, the network device 103 sends the packet in the format shown in FIG. 8 to the network device 104 through an outbound interface corresponding to the port number 0003.

After receiving the packet in the format shown in FIG. 8, the network device 104 determines, based on the index number 0 in the segment left field, that the last-hop network device of the packet is the network device 104. Therefore, the IPv6 header and the Ethernet header in the packet may be decapsulated to obtain a payload (payload) in data information included in the packet.

In a process of forwarding the packet by the network device 102 and the network device 103, the packet can be forwarded without searching a forwarding information table or a MAC table, and time for obtaining the outbound interface information from the packet header of the packet is far less than time for table lookup. Therefore, packet forwarding efficiency is effectively improved. In addition, the network device 102 and the network device 103 do not need to store the forwarding information table or the MAC table. Therefore, storage space of the network device 102 and the network device 103 is also saved.

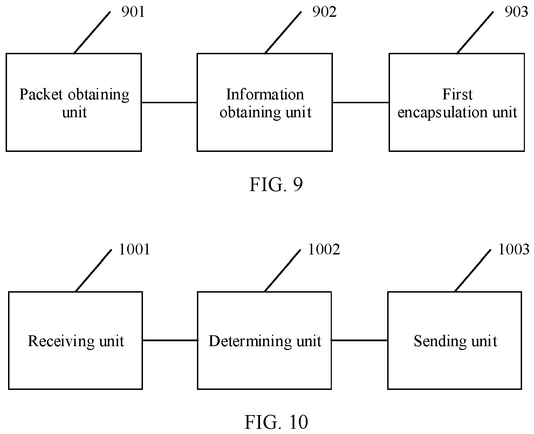

Correspondingly, referring to FIG. 9, an embodiment of this application further provides a packet processing apparatus. The apparatus is applied to a source device, and the source device may implement the function of the source device in the embodiment shown in FIG. 2. The source device includes a packet obtaining unit 901, an information obtaining unit 902, and a first encapsulation unit 903. The packet obtaining unit 901 is configured to perform S101 in the embodiment shown in FIG. 2. The information obtaining unit 902 is configured to perform S102 in the embodiment shown in FIG. 2. The first encapsulation unit 903 is configured to perform S103 in the embodiment shown in FIG. 2. Specifically, the packet obtaining unit 901 is configured to obtain a packet including a destination address.

The information obtaining unit 902 is configured to obtain outbound interface information of a network device on a forwarding path based on the destination address of the packet, where the forwarding path is a path for forwarding the packet from the source device to a destination device corresponding to the destination address. The first encapsulation unit 903 is configured to encapsulate a packet header for the packet, where the packet header includes the outbound interface information of the network device that forwards the packet on the forwarding path.

The packet processing apparatus can implement the function of the corresponding network device in the foregoing method embodiment. For specific to-be-performed steps, refer to the foregoing method embodiment. Details are not described herein again.

Referring to FIG. 10, an embodiment of this application provides a packet forwarding apparatus. The apparatus is applied to a network device, and the network device may implement the function of the network device in the embodiment shown in FIG. 6. The network device includes a receiving unit 1001, a determining unit 1002, and a sending unit 1003. The receiving unit 1001 is configured to perform S201 in the embodiment shown in FIG. 6. The determining unit 1002 is configured to perform S202 in the embodiment shown in FIG. 6. The sending unit 1003 is configured to perform S203 in the embodiment shown in FIG. 6. Specifically, the receiving unit 1001 is configured to receive a packet, where a packet header of the packet includes outbound interface information that is of the network device and that is used to forward the packet. The determining unit 1002 is configured to determine, based on the outbound interface information, an outbound interface corresponding to the outbound interface information. The sending unit 1003 is configured to send the packet to a next-hop network device of the network device through the outbound interface.

The packet forwarding apparatus can implement the function of the corresponding network device in the foregoing method embodiment. For specific to-be-performed steps, refer to the foregoing method embodiment. Details are not described herein again.

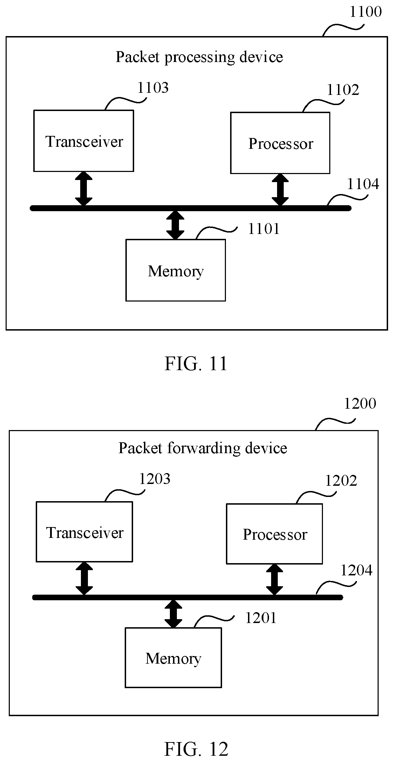

Referring to FIG. 11, an embodiment of this application provides a packet processing device 1100. The device is a source device. The device 1100 may implement the function of the source device in the embodiment shown in FIG. 2. The device includes a memory 1101, a processor 1102, and a transceiver 1103.

The memory 1101 is configured to store an instruction.

The processor 1102 is configured to execute the instruction in the memory 1101 and perform the foregoing packet processing method applied to the source device in the embodiment shown in FIG. 2.

The transceiver 1103 is configured to communicate with a network device on a forwarding path.

The memory 1101, the processor 1102, and the transceiver 1103 are interconnected through a bus 1104. The bus 1104 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 11, but this does not mean that there is only one bus or only one type of bus.

Referring to FIG. 12, an embodiment of this application provides a packet forwarding device 1200. The device is a network device. The device 1200 may implement the function of the network device in the embodiment shown in FIG. 6. The device includes a memory 1201, a processor 1202, and a transceiver 1203.

The memory 1201 is configured to store an instruction.

The processor 1202 is configured to execute the instruction in the memory 1201 and perform the foregoing packet forwarding method applied to the network device in the embodiment shown in FIG. 6.

The transceiver 1203 is configured to communicate with a next-hop network device of the network device.

The memory 1201, the processor 1202, and the transceiver 1203 are interconnected through a bus 1204. The bus 1204 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 12, but this does not mean that there is only one bus or only one type of bus.

The memory 1101 and the memory 1201 may be a random access memory (random-access memory, RAM), a flash (flash), a read-only memory (read only memory, ROM), an erasable programmable read only memory (erasable programmable read only memory, EPROM), an electrically erasable programmable read only memory (electrically erasable programmable read only memory, EEPROM), a register (register), a hard disk, a removable hard disk, a CD-ROM, or any other form of storage medium known to a person skilled in the art.

The processor 1102 and the processor 1202 may be a central processing unit (central processing unit, CPU), a general-purpose processor, a digital signal processor (digital signal processing, DSP), an application specific integrated circuit (application specific integrated circuit, ASIC), a field programmable gate array (field programmable gate array, FPGA), or another programmable logical device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

The transceiver 1103 and the transceiver 1203 may be, for example, an interface card, or may be an ethernet (ethernet) interface or an asynchronous transfer mode (asynchronous transfer mode, ATM) interface.

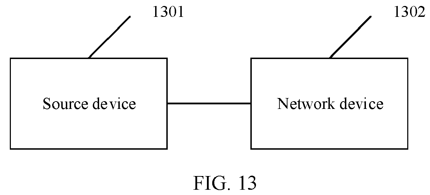

Referring to FIG. 13, an embodiment of this application further provides a packet processing system. The system includes a source device 1301 and a network device 1302. The source device 1301 is configured to execute the function of the packet processing apparatus in the embodiment shown in FIG. 9, and the network device 1302 is configured to execute the function of the packet forwarding apparatus in the embodiment shown in FIG. 10. Details are as follows:
The source device 1301 is configured to: obtain a packet including a destination address: obtain outbound interface information of a network device on a forwarding path based on the destination address of the packet, where the forwarding path is a path for forwarding the packet from the source device to a destination device corresponding to the destination address; and encapsulate a packet header for the packet, where the packet header includes the outbound interface information of the network device that forwards the packet on the forwarding path.
The network device 1302 is configured to: receive the packet; determine, based on the outbound interface information in the packet, an outbound interface corresponding to the outbound interface information; and send the packet to a next-hop network device of the network device through the outbound interface.

An embodiment of this application further provides a computer readable storage medium including an instruction. When the instruction runs on a computer, the computer is enabled to perform the foregoing packet processing method applied to the source device.

An embodiment of this application further provides a computer readable storage medium including an instruction. When the instruction runs on a computer, the computer is enabled to perform the foregoing packet forwarding method applied to the network device.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processor, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

A person skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

In the foregoing specific implementations, the objectives, technical solutions, and benefits of the present invention are further described in detail. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A packet processing method, wherein the method is applied to a source device and comprises:
obtaining a packet comprising a destination address;
obtaining outbound interface information of a network device on a forwarding path based on the destination address of the packet, wherein the forwarding path is a path for forwarding the packet from the source device to a destination device corresponding to the destination address; and
encapsulating a packet header for the packet, wherein the packet header comprises the outbound interface information of the network device that forwards the packet on the forwarding path.

2. The method according to claim 1, wherein the outbound interface information of the network device on the forwarding path comprises outbound interface information of the source device, and the method further comprises:
forwarding the packet to a next-hop network device of the source device through an outbound interface corresponding to the outbound interface information of the source device.

3. The method according to claim 2, wherein the packet header comprises a first field, and the first field stores location information of the outbound interface information of the source device in the packet header.

4. The method according to claim 3, wherein the packet header further comprises a segment list;
the segment list comprises an array, the array is used to store the outbound interface information of the network device on the forwarding path, each element in the array stores one piece of outbound interface information, and each element in the array has an index number of the element; and
that the first field stores location information of the outbound interface information of the source device in the packet header comprises:
the first field stores an index number of an element corresponding to the outbound interface information of the source device.

5. The method according to claim 4, wherein elements in the array in the segment list are arranged in a sequence of forwarding the packet by network devices comprised in the forwarding path, and index numbers of the elements indicate the forwarding sequence.

6. The method according to any one of claims 3 to 5, wherein the packet header further comprises a second field, and the second field is used to indicate the source device to modify, after the source device obtains the outbound interface information corresponding to the source device, the location information that is of the outbound interface information of the source device in the packet header and that is stored in the first field into location information of outbound interface information of the next-hop network device in the packet header.

7. The method according to any one of claims 1 to 5, wherein the method further comprises:
encapsulating an internet protocol version 6 IPv6 header for the packet, wherein the IPv6 header comprises a destination address field, and the destination address field stores the outbound interface information of the source device.

8. The method according to any one of claims 1 to 7, wherein the method further comprises:
encapsulating an Ethernet header for the packet, wherein the Ethernet header comprises a destination media access control MAC address, and the destination MAC address is used to indicate the network device on the forwarding path to obtain the outbound interface information corresponding to the network device from the packet header.

9. The method according to any one of claims 1 to 8, wherein the packet header is a segment routing header.

10. A packet forwarding method, wherein the method is applied to a network device and comprises:
receiving a packet, wherein a packet header of the packet comprises outbound interface information that is of the network device and that is used to forward the packet;
determining, based on the outbound interface information, an outbound interface corresponding to the outbound interface information; and
sending the packet to a next-hop network device of the network device through the outbound interface.

11. The method according to claim 10, wherein the packet header further comprises a first field;
the first field stores location information of the outbound interface information of the network device in the packet header; and
before the determining, based on the outbound interface information, an outbound interface corresponding to the outbound interface information, the method further comprises:
obtaining the outbound interface information of the network device from the packet header based on the location information that is of the outbound interface information of the network device in the packet header and that is stored in the first field.

12. The method according to claim 11, wherein the packet header further comprises a segment list, the segment list comprises an array, an element in the array is used to store the outbound interface information of the network device, and the element in the array has an index number; and
that the first field stores location information of the outbound interface information of the network device in the packet comprises:
the first field stores an index number of an element corresponding to the outbound interface information of the network device.

13. The method according to claim 11 or 12, wherein the packet further comprises a second field, and the packet header further comprises outbound interface information of the next-hop network device; and
after the receiving a packet, the method further comprises:
modifying, according to an indication of the second field, the location information that is of the outbound interface information of the network device in the packet and that is stored in the first field into location information of the outbound interface information of the next-hop network device in the packet header.

14. The method according to claim 13, wherein the packet further comprises an internet protocol version 6 IPv6 header, the IPv6 header comprises a destination address field, and the destination address field stores the outbound interface information of the network device.

15. The method according to any one of claims 10 to 14, wherein the packet further comprises an Ethernet header, the Ethernet header comprises a destination media access control MAC address, and the destination MAC address is used to indicate the network device to determine the corresponding outbound interface based on the outbound interface information in the packet header.

16. A packet processing apparatus, wherein the apparatus is applied to a source device and comprises:
a packet obtaining unit, configured to obtain a packet comprising a destination address;
an information obtaining unit, configured to obtain outbound interface information of a network device on a forwarding path based on the destination address of the packet, wherein the forwarding path is a path for forwarding the packet from the source device to a destination device corresponding to the destination address; and
a first encapsulation unit, configured to encapsulate a packet header for the packet, wherein the packet header comprises the outbound interface information of the network device that forwards the packet on the forwarding path.

17. The apparatus according to claim 16, wherein the outbound interface information of the network device on the forwarding path comprises outbound interface information of the source device; and
the apparatus further comprises:
a packet forwarding unit, configured to forward the packet to a next-hop network device of the source device through an outbound interface corresponding to the outbound interface information of the source device.

18. The apparatus according to claim 17, wherein the packet header comprises a first field, and the first field stores location information of the outbound interface information of the source device in the packet header.

19. The apparatus according to claim 18, wherein the packet header further comprises a segment list;
the segment list comprises an array, the array is used to store the outbound interface information of the network device on the forwarding path, each element in the array stores one piece of outbound interface information, and each element in the array has an index number of the element; and
that the first field stores location information of the outbound interface information of the source device in the packet header comprises:
the first field stores an index number of an element corresponding to the outbound interface information of the source device.

20. The apparatus according to claim 19, wherein elements in the array in the segment list are arranged in a sequence of forwarding the packet by network devices comprised in the forwarding path, and index numbers of the elements indicate the forwarding sequence.

21. The apparatus according to any one of claims 18 to 20, wherein the packet header further comprises a second field, and the second field is used to indicate the source device to modify, after the source device obtains the outbound interface information corresponding to the source device, the location information that is of the outbound interface information of the source device in the packet header and that is stored in the first field into location information of outbound interface information of the next-hop network device in the packet header in the packet header.

22. The apparatus according to any one of claims 17 to 21, wherein the apparatus further comprises:
a second encapsulation unit, configured to encapsulate an internet protocol version 6 IPv6 header for the packet, wherein the IPv6 header comprises a destination address field, and the destination address field stores the outbound interface information of the source device.

23. The apparatus according to any one of claims 17 to 22, wherein the apparatus further comprises:
a third encapsulation unit, configured to encapsulate an Ethernet header for the packet, wherein the Ethernet header comprises a destination media access control MAC address, and the destination MAC address is used to indicate the network device on the forwarding path to obtain the outbound interface information corresponding to the network device from the packet header.

24. The apparatus according to any one of claims 17 to 23, wherein the packet header is a segment routing header.

25. A packet forwarding apparatus, wherein the apparatus is applied to a network device and comprises:
a receiving unit, configured to receive a packet, wherein a packet header of the packet comprises outbound interface information that is of the network device and that is used to forward the packet;
a determining unit, configured to determine, based on the outbound interface information, an outbound interface corresponding to the outbound interface information; and
a sending unit, configured to send the packet to a next-hop network device of the network device through the outbound interface.

26. The apparatus according to claim 25, wherein the packet header further comprises a first field;
the first field stores location information of the outbound interface information of the network device in the packet; and
the apparatus further comprises:
an obtaining unit, configured to obtain the outbound interface information of the network device from the packet header based on the location information that is of the outbound interface information of the network device in the packet header and that is stored in the first field.

27. The apparatus according to claim 26, wherein the packet header further comprises a segment list, the segment list comprises an array, an element in the array is used to store the outbound interface information of the network device, and the element in the array has an index number; and
that the first field stores location information of the outbound interface information of the network device in the packet comprises:
the first field stores an index number of an element corresponding to the outbound interface information of the network device.

28. The apparatus according to claim 26 or 27, wherein the packet further comprises a second field, and the packet header further comprises outbound interface information of the next-hop network device; and
the apparatus further comprises:
a modifying unit, configured to modify, according to an indication of the second field, the location information that is of the outbound interface information of the network device in the packet and that is stored in the first field into location information of the outbound interface information of the next-hop network device in the packet header.

29. The apparatus according to claim 28, wherein the packet further comprises an internet protocol version 6 IPv6 header, the IPv6 header comprises a destination address field, and the destination address field stores the outbound interface information of the network device.

30. The apparatus according to any one of claims 25 to 28, wherein the packet further comprises an Ethernet header, the Ethernet header comprises a destination media access control MAC address, and the destination MAC address is used to indicate the network device to determine the corresponding outbound interface based on the outbound interface information in the packet header.

31. A computer readable storage medium comprising an instruction, wherein when the instruction runs on a computer, the computer is enabled to perform the forgoing method according to any one of claims 1 to 15.
